(19)

Europäisches
Patentamt
European
Patent Office
Office européen
des brevets

(11)     **EP 2 736 162 B1**

(12)     **EUROPEAN PATENT SPECIFICATION**

(45) Date of publication and mention
of the grant of the patent:
**13.11.2019 Bulletin 2019/46**

(51) Int Cl.:
***H02P 6/00*** *(2016.01)*

(21) Application number: **13193407.7**

(22) Date of filing: **19.11.2013**

(54) **Method and apparatus for maximising energy efficiency of an electric drive system**

Verfahren und Vorrichtung zur Maximierung der Energieeffizienz eines elektrischen Antriebssystems

Procédé et appareil permettant de maximiser le rendement énergétique d'un système d'entraînement
électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2012 FI 20126222**

(43) Date of publication of application:
**28.05.2014 Bulletin 2014/22**

(73) Proprietor: **ABB Schweiz AG
5400 Baden (CH)**

(72) Inventor: **Tolvanen, Jukka
00380 Helsinki (FI)**

(74) Representative: **Kolster Oy Ab
(Salmisaarenaukio 1)
P.O. Box 204
00181 Helsinki (FI)**

(56) References cited:
**JP-A- 2000 217 208     US-A1- 2012 217 908**

- **FANSLOW M ET AL: "Considerations in the
Selection and Application of AC and DC Motors
for Cement Plants", CEMENT INDUSTRY
TECHNICAL CONFERENCE RECORD, 2009 IEEE,
IEEE, PISCATAWAY, NJ, USA, 29 May 2009
(2009-05-29), pages 1-22, XP031478453, ISBN:
978-1-4244-3698-9**

**Description**

FIELD OF THE INVENTION

The present invention relates to electric drive systems, particularly to maximising energy efficiency of an electric drive system.

BACKGROUND INFORMATION

Manufacturers of present-day frequency converters can utilise various techniques in controlling behaviour of a torque of a motor in respect to a rotational speed of the motor in an electric drive application.

The applications can, for example, be divided into two groups on the basis of the behaviour of the load: linear torque/speed ratio applications and quadratic torque/speed ratio applications. In linear (torque/speed ratio) applications, the torque applied to the load is directly proportional to the rotational speed. In quadratic (torque/speed ratio) applications, the torque is proportional to the square of the rotational speed.

Some linear applications, such as constant-torque loads typically found in industrial applications, may require high dynamic performance. In order to be able to maintain a full torque output from the motor at various motor speeds, the drive provides the motor with a nominal flux.

However, in some quadratic applications, such as pump or fan applications, the dynamic performance requirements may not be as demanding as in linear applications. In such applications, the flux applicable by the drive can be limited, allowing thus more economic performance. On the other hand, this approach may result in a reduced dynamic performance of the drive, as there is a more limited flux capability available than with the nominal flux.

In some frequency converters, one of the above approaches, i.e. a more dynamic performance or a more economic performance, may be selected as the default performance approach, and the other may be selected by the user. The user does not, however, always select the more appropriate approach for the application in question.

BRIEF DISCLOSURE

An object of the present invention is to provide a method and an apparatus for implementing the method so as to alleviate the above disadvantages. The objects of the invention are achieved by a method and an arrangement which are characterized by what is stated in the independent claims. The preferred embodiments of the invention are disclosed in the dependent claims.

The disclosed method allows automatised selection of the operating mode, i.e. a dynamic performance mode where a nominal flux is used or an economic performance mode where the flux is limited in order to achieve energy savings.

The disclosed method first gathers a set of data points of torques at different rotational speeds. Then, the method calculates with which behaviour of the load, i.e. the linear behaviour or the quadratic behaviour, the data points have better correlation. On the basis of the result of this calculation, one of the two torque/speed behaviours is selected to represent the torque characteristics of the system, and the motor is controlled on the basis of the selected behaviour. As the behaviour is automatically determined, selecting a more appropriate operating mode does not have to rely on user input.

Document US 2012/0217908 A1 discloses a method and a system for controlling an electrical motor at or near stall conditions. In the method, based on the magnitude of the torque command and the position of the rotor, the direct axis and quadrature axis current commands are modified such that a generally constant shaft torque output is obtained.

BRIEF DESCRIPTION OF THE DRAWINGS

In the following the invention will be described in greater detail by means of preferred embodiments with reference to the attached drawings, in which

Figure 1 illustrates linear and quadratic behaviour of a torque in respect to a rotational speed;
Figure 2 illustrates a flowchart of an exemplary implementation of the disclosed method; and
Figure 3 illustrates an apparatus for maximising energy efficiency of an electric drive system comprising an electric motor and a load.

DETAILED DISCLOSURE

The present disclosure discloses a method for maximising energy efficiency of an electric drive system comprising an electric motor and a load. The disclosed method allows automatic detection of different behaviours of torque of the motor in respect to a rotational speed of the motor, i.e. detection of different torque/speed ratios.

In the disclosed method, the torque characteristics of the system may be selected from two types of behaviour: linear behaviour and quadratic behaviour of the torque in respect to the rotational speed.

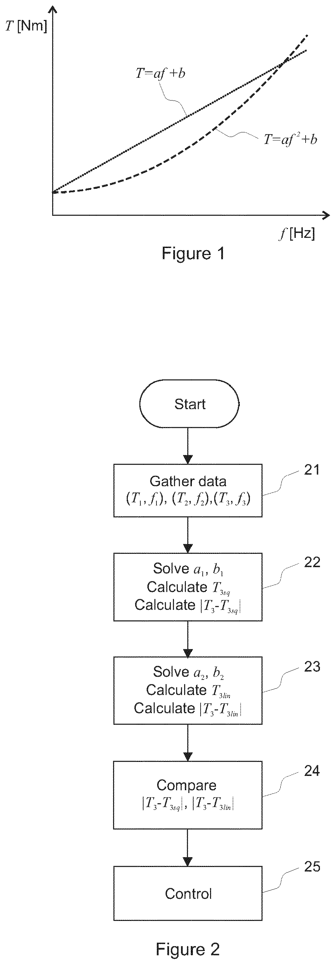

Figure 1 illustrates the linear and quadratic system behaviour of a torque in respect to a rotational speed. The linear behaviour (dotted line) represents a situation where the torque $T$ is directly proportional to the rotational speed $f$:

$$T = af + b, \tag{1}$$

where $a$ is a coefficient which represents the relation between the torque and the rotational speed, and $b$ represents a constant torque which is independent from the rotational speed.

The quadratic behaviour (dashed line) represents a situation where the torque is proportional to the square of the rotational speed $f$:

$$T = af^2 + b. \tag{2}$$

Again, $a$ represents the relation between the torque and the rotational speed, and $b$ represents a constant torque which is independent from the rotational speed.

In order to be able to maximise the energy efficiency, the disclosed method automatically determines torque characteristics of the system in question, i.e. which of Equations (1) and (2) better describes the system. The motor can then be controlled on the basis of the determined torque characteristics.

Determining torque characteristics may, for example, comprise first determining the torque of the motor and the rotational speed of the motor. The torque and rotational speed may be directly measured, or they may also be estimated, for example, by a frequency converter controlling the motor. If information on how much power is supplied to the motor is available, the torque can be calculated from the power. The rotational speed may be determined from the output frequency of the frequency converter.

The disclosed method may then gather a plurality of data points, where each data point represents the torque of the motor at a rotational speed of the motor.

On the basis of the data points, a value for a first parameter may be calculated. The first parameter represents how much the data points deviate from the quadratic behaviour. A value for a second parameter is also calculated on the basis of the data points. The second parameter, in turn, represents how much the data points deviate from the linear behaviour. Then, the first parameter may be compared with the second parameter, and the torque characteristics may be determined on the basis of the comparison.

When the torque characteristics have been determined, the motor may be controlled on the basis of the determined torque characteristics. On the basis of the torque characteristics, the operating mode, i.e. the dynamic performance mode where the flux is not limited or the economic performance mode where the flux is limited in order to improve energy efficiency, can be chosen.

If the electric drive system is controlled on the basis of a torque reference, and if the electric drive can initially bet set to the economic performance mode, determining the torque characteristics can also be accomplished by monitoring the rate of change of the torque reference or the difference between the torque reference and the actual torque.

For example, the magnitude of the rate of change of the torque reference may first be determined. The magnitude may then be compared with a set limit, and if the magnitude exceeds the set limit, the electric drive can be set to the dynamic performance mode.

Alternatively, the torque of the motor may first be determined. The difference between the torque reference and the determined torque may then be determined and compared with a set limit. If the difference exceeds the set limit, the electric drive is set to the dynamic performance mode.

Figure 2 illustrates a flowchart of an exemplary implementation of the disclosed method. In the first step 21 the torque and the rotational speed are measured and data points are gathered.

In the second step 22, the value for a first parameter is calculated. Two equations are formed on the basis of two data points, for example $(T_1, f_1)$ and $(T_2, f_2)$. For each data point, the torque is represented by the square of the rotational speed multiplied by a first coefficient and incremented by a second coefficient. The equations for the two data points $(T_1, f_1)$ and $(T_2, f_2)$ have the same coefficients $a_{sq}$ and $b_{sq}$:

$$T_1 = a_{sq} f_1^2 + b_{sq}, \tag{3}$$

$$T_2 = a_{sq} f_2^2 + b_{sq} \, . \tag{4}$$

The values of the coefficients $a_{sq}$ and $b_{sq}$ may then be solved as follows:

$$a_{sq} = \frac{T_1 - T_2}{f_1^2 - f_2^2} \, , \tag{5}$$

$$b_{sq} = \frac{T_2 f_1^2 - T_1 f_2^2}{f_1^2 - f_2^2} \, . \tag{6}$$

On the basis of the coefficients $a_{sq}$ and $b_{sq}$ and the rotational speed $f_3$ at a third data point, an expected torque $T_{3sq}$ for the rotational speed in the third data may be calculated.

$$T_{3sq} = a_{sq} f_3^2 + b_{sq} \, . \tag{7}$$

The difference between the expected torque $T_{3sq}$ and the torque $T_3$ at the third data point may then be calculated, and the magnitude $|T_3 - T_{3sq}|$ of the difference may be used as the value of the first parameter.
In the third step 23, the value for a second parameter is calculated. Calculating the value for the second parameter in the third step 23 can be performed in a similar manner to that in the second step 22. Two equations are formed on the basis of two data points, for example $(T_1, f_1)$ and $(T_2, f_2)$. For both data points, the torque is represented by the rotational speed multiplied by a first coefficient and incremented by a second coefficient. The equations for the two data points $(T_1, f_1)$ and $(T_2, f_2)$ have the same coefficients $a_{lin}$ and $b_{lin}$:

$$T_1 = a_{lin} f_1 + b_{lin} \, , \tag{8}$$

$$T_2 = a_{lin} f_2 + b_{lin} \, . \tag{9}$$

Values of the coefficients $a_{lin}$ and $b_{lin}$ may be solved as follows:

$$a_{lin} = \frac{T_1 - T_2}{f_1 - f_2} \, , \tag{10}$$

$$b_{lin} = \frac{T_2 f_1 - T_1 f_2}{f_1 - f_2} \, . \tag{11}$$

An expected torque $T_{3lin}$ for a rotational speed at the third data point is calculated on the basis of the coefficients $a_{lin}$ and $b_{lin}$ and the rotational speed $f_3$ at the third data point:

$$T_{3lin} = a_{lin} f_3^2 + b_{lin} \, . \tag{12}$$

The difference between the expected torque $T_{3lin}$ and the torque $T_3$ at the third data point may then be calculated, and the magnitude $|T_3 - T_{3lin}|$ of the difference may be used as the value of the second parameter.
In the fourth step 24 in Figure 1, the first parameter is compared with the second parameter and the torque characteristics of the system are determined on the basis of the comparison. The behaviour, i.e the linear or quadratic torque/speed ratio, which better fits the data points may be selected as the system torque characteristics.
Finally, in fifth step 25, the motor is controlled on the basis of the determined torque characteristics.
Calculation of the first and the second parameter is not, however, limited to the above examples. In some applications, where accurate measurements are not easily obtained, the method of least squares may, for example, be used. For example, the data points may be fitted to Equations (1) and (2) by using the method of least squares and the torque characteristics to be used may then be selected on the basis of the best fit. On the other hand, the method of least squares is computationally somewhat more complex than the three-point curve fitting as disclosed in Equations (3) to (12).

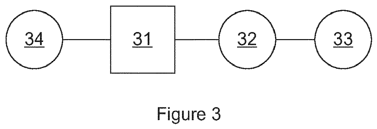

Figure 3 illustrates an apparatus 31 for maximising energy efficiency of an electric drive system comprising an electric motor 32 and a load 33. The load 33 in Figure 3 is a fan which is rotated by the motor 32. The apparatus 31 in Figure 3 is a frequency converter which controls the motor 32 and implements the disclosed method. The frequency converter 31 automatically selects appropriate torque characteristics to be used, depending on the application. The torque characteristics in the frequency converter 31 may be selected from two types of behaviour: linear and quadratic behaviour of a torque of the motor in respect to a rotational speed of the motor.

The frequency converter 31 acts as means for determining a torque of the motor and a rotational speed of the motor. In Figure 3, it has internal estimates of said variables. The frequency converter 31 gathers a plurality of data points to its internal memory. Each data point represents the torque of the motor at a rotational speed of the motor.

The frequency converter 31 in Figure 3 comprises computing means, such as a microprocessor, a DSP, an FPGA, or an ASIC, which are used for calculating the value for a first and a second parameter on the basis of the data points. The first parameter represents how much the data points deviate from the quadratic behaviour of the torque, and the second parameter represents how much the data points deviate from the linear behaviour of the torque. The calculation of the values for the first parameter and the second parameter can, for example, be performed as disclosed in the exemplary implementation of Figure 2.

After calculating the first and the second parameter, the computing means of the frequency converter 31 compare the first parameter with the second parameter, and determine the torque characteristics on the basis of the comparison. The frequency converter 31 then controls the motor by using determined torque characteristics.

The apparatus for maximising the energy efficiency may also be an external device attached to a frequency converter. The apparatus may determine the behaviour of the system as disclosed above and may then set the frequency converter to an appropriate operating mode, i.e. the dynamic performance mode or the economic performance mode.

### Claims

1. A method for maximising energy efficiency of an electric drive system comprising an electric motor and a load, wherein the method **characterized by** determining speed dependent torque characteristics of the system (21, 22, 23, 24), wherein the torque characteristics are selected from two types of behaviour: linear or quadratic behaviour of a torque of the motor in respect to a rotational speed of the motor, and
controlling the motor on the basis of the determined torque characteristics (25).

2. A method as claimed in claim 1, wherein determining the torque characteristics comprises
determining a torque of the motor and a rotational speed of the motor,
gathering a plurality of data points, wherein each data point represents the torque of the motor at the rotational speed of the motor,
calculating a value for a first parameter on the basis of the data points, wherein the first parameter represents how much the data points deviate from the quadratic behaviour of the torque,
calculating a value for a second parameter on the basis of the data points, wherein the second parameter represents how much the data points deviate from the linear behaviour of the torque,
comparing the first parameter with the second parameter, and
determining the torque characteristics on the basis of the comparison.

3. A method as claimed in claim 2, wherein calculating the value for the first parameter comprises
forming two equations on the basis of two data points, wherein, for each data point, the torque is the square of the rotational speed multiplied by a first coefficient and incremented by a second coefficient, and wherein both equations have the same coefficients,
solving the values of the coefficients,
calculating an expected torque for a rotational speed at a third data point on the basis of the coefficients and the rotational speed at the third data point,
calculating the difference between the expected torque and the torque at the third data point, and
using the difference as the value of the first parameter, and
wherein calculating the value for the second parameter comprises
forming two equations on the basis of two data points, wherein, for each data point, the torque is the rotational speed multiplied by a first coefficient and incremented by a second coefficient, and wherein both equations have the same coefficients,
solving the coefficients,
calculating an expected torque for a rotational speed at a third data point on the basis of the coefficients and the rotational speed at the third data point,
calculating the difference between the expected torque and the torque at the third data point, and
using the difference as the value of the second parameter.

4. A method as claimed in claim 2 or 3, wherein the torque is calculated from a determined power supplied to the motor.

5. A method as claimed in claim 1, wherein the electric drive system is controlled on the basis of a torque reference, wherein the electric drive is initially set to an economic performance mode where the flux is limited in order to achieve energy savings, and wherein determining the torque characteristics comprises
determining the magnitude of the rate of change of the torque reference,
comparing the magnitude with a set limit, and if the magnitude exceeds the set limit,
setting the electric drive to a dynamic performance mode where the flux is not limited.

6. A method as claimed in claim 1, wherein the electric drive system is controlled on the basis of a torque reference, wherein the electric drive is initially set to an economic performance mode where the flux is limited in order to improve energy efficiency, and wherein determining the torque characteristics comprises
determining a torque of the motor,
determining the difference between the torque reference and the determined torque,
comparing the difference with a set limit, and if the difference exceeds the set limit,
setting the electric drive to a dynamic performance mode where the flux is not limited.

7. An apparatus for maximising energy efficiency of an electric drive system comprising an electric motor and a load, wherein the apparatus **characterized by** means (31) configured to determine speed dependent torque characteristics, wherein the torque characteristics of the system are selected from two types of behaviour: linear and quadratic behaviour of a torque of the motor in respect to a rotational speed of the motor, and
means (31) configured to control the motor on the basis of the determined torque characteristics.

8. An apparatus as claimed in claim 7, wherein the means for determining the torque characteristics comprise
means for determining a torque of the motor and a rotational speed of the motor,
means for gathering a plurality of data points, wherein each data point represents the torque of the motor at the rotational speed of the motor,
means for calculating a value for a first parameter on the basis of the data points, wherein the first parameter represents how much the data points deviate from the quadratic behaviour of the torque,
means for calculating a value for a second parameter on the basis of the data points, wherein the second parameter represents how much the data points deviate from the linear behaviour of the torque,
means for comparing the first parameter with the second parameter,
means for determining the torque characteristics on the basis of the comparison, and
means for controlling the motor on the basis of the determined torque characteristics.

**Patentansprüche**

1. Verfahren zum Maximieren eines energetischen Wirkungsgrads eines elektrischen Antriebssystems mit einem Elektromotor und einem Verbraucher, wobei das Verfahren **gekennzeichnet ist durch**
Bestimmen einer drehzahlabhängigen Drehmomentkennlinie des Systems (21, 22, 23, 24), wobei die Drehmomentkennlinie aus zwei Arten von Verhalten ausgewählt ist: lineares oder quadratisches Verhalten eines Drehmoments des Motors in Bezug auf eine Drehzahl des Motors, und
Steuern des Motors auf der Grundlage der bestimmten Drehmomentkennlinie (25).

2. Verfahren nach Anspruch 1, wobei das Bestimmen der Drehmomentkennlinie umfasst
Bestimmen eines Drehmoments des Motors und einer Drehzahl des Motors,
Erfassen mehrerer Datenpunkte, wobei jeder Datenpunkt das Drehmoment des Motors bei der Drehzahl des Motors darstellt,
Berechnen eines Werts für einen ersten Parameter auf der Grundlage der Datenpunkte, wobei der erste Parameter darstellt, wie weit die Datenpunkte von dem quadratischen Verhalten des Drehmoments abweichen,

Berechnen eines Werts für einen zweiten Parameter auf der Grundlage der Datenpunkte, wobei der zweite Parameter darstellt, wie weit die Datenpunkte von dem linearen Verhalten des Drehmoments abweichen,
Vergleichen des ersten Parameters mit dem zweiten Parameter, und
Bestimmen der Drehmomentkennlinie auf der Grundlage des Vergleichs.

3. Verfahren nach Anspruch 2, wobei das Berechnen des Werts für den ersten Parameter umfasst
Bilden von zwei Gleichungen auf der Grundlage von zwei Datenpunkten, wobei für jeden Datenpunkt das Drehmoment das Quadrat der Drehzahl multipliziert mit einem ersten Koeffizienten und erhöht um einen zweiten Koeffizienten ist, und wobei beide Gleichungen dieselben Koeffizienten aufweisen,
Lösen der Werte der Koeffizienten,
Berechnen eines erwarteten Drehmoments für eine Drehzahl an einem dritten Datenpunkt auf der Grundlage der Koeffizienten und der Drehzahl an dem dritten Datenpunkt,
Berechnen der Differenz zwischen dem erwarteten Drehmoment und dem Drehmoment an dem dritten Datenpunkt, und
Verwenden der Differenz als den Wert des ersten Parameters, und
wobei das Berechnen des Wertes des zweiten Parameters umfasst
Bilden von zwei Gleichungen auf der Grundlage von zwei Datenpunkten, wobei für jeden Datenpunkt das Drehmoment die Drehzahl multipliziert mit einem ersten Koeffizienten und erhöht um einen zweiten Koeffizienten ist, und wobei beide Gleichungen dieselben Koeffizienten aufweisen,
Lösen der Koeffizienten,
Berechnen eines erwarteten Drehmoments für eine Drehzahl an einem dritten Datenpunkt auf der Grundlage der Koeffizienten und der Drehzahl an dem dritten Datenpunkt,
Berechnen der Differenz zwischen dem erwarteten Drehmoment und dem Drehmoment an dem dritten Datenpunkt, und
Verwenden der Differenz als den Wert des zweiten Parameters.

4. Verfahren nach Anspruch 2 oder 3, wobei das Drehmoment aus einer dem Motor zugeführten bestimmten Leistung berechnet wird.

5. Verfahren nach Anspruch 1, wobei das elektrische Antriebssystem auf der Grundlage eines Drehmomentbezugswerts gesteuert wird, wobei der elektrische Antrieb anfänglich auf einen Leistungssparmodus eingestellt ist, bei dem ein Fluss begrenzt ist, um Energieeinsparungen zu erzielen, und wobei das Bestimmen der Drehmomentkennlinie umfasst
Bestimmen der Größe der Änderungsrate des Drehmomentbezugswerts,
Vergleichen der Größe mit einem festgelegten Grenzwert, und wenn die Größe den festgelegten Grenzwert übersteigt,
Einstellen des elektrischen Antriebs auf einen dynamischen Leistungsmodus, bei dem der Fluss nicht begrenzt ist.

6. Verfahren nach Anspruch 1, wobei das elektrische Antriebssystem auf der Grundlage eines Drehmomentbezugswerts gesteuert wird, wobei der elektrische Antrieb anfänglich auf einen Leistungssparmodus eingestellt ist, bei dem der Fluss begrenzt ist, um einen energetischen Wirkungsgrad zu verbessern, und wobei das Bestimmen der Drehmomentkennlinie umfasst
Bestimmen eines Drehmoments des Motors,
Bestimmen der Differenz zwischen dem Drehmomentbezugswert und dem bestimmten Drehmoment,
Vergleichen der Differenz mit einem festgelegten Grenzwert, und wenn die Differenz den festgelegten Grenzwert übersteigt,
Einstellen des elektrischen Antriebs auf einen dynamischen Leistungsmodus, bei dem der Fluss nicht begrenzt ist.

7. Einrichtung zum Maximieren eines energetischen Wirkungsgrads eines elektrischen Antriebssystems mit einem Elektromotor und einem Verbraucher, wobei die Einrichtung **gekennzeichnet ist durch**
Mittel (31), die zum Bestimmen einer drehzahlabhängigen Drehmomentkennlinie ausgebildet sind, wobei die Drehmomentkennlinie des Systems aus zwei Arten von Verhalten ausgewählt ist: lineares oder quadratisches Verhalten eines Drehmoments des Motors in Bezug auf eine Drehzahl des Motors, und
Mittel (31), die zum Steuern des Motors auf der Grundlage der bestimmten Drehmomentkennlinie ausgelegt sind.

8. Einrichtung nach Anspruch 7, wobei die Mittel zum Bestimmen der Drehmomentkennlinie umfassen
Mittel zum Bestimmen eines Drehmoments des Motors und einer Drehzahl des Motors,
Mittel zum Erfassen mehrerer Datenpunkte, wobei jeder Datenpunkt das Drehmoment des Motors bei der Drehzahl

**EP 2 736 162 B1**

des Motors darstellt,
Mittel zum Berechnen eines Werts für einen ersten Parameter auf der Grundlage der Datenpunkte, wobei der erste Parameter darstellt, wie weit die Datenpunkte von dem quadratischen Verhalten des Drehmoments abweichen,
Mittel zum Berechnen eines Werts für einen zweiten Parameter auf der Grundlage der Datenpunkte, wobei der zweite Parameter darstellt, wie weit die Datenpunkte von dem linearen Verhalten des Drehmoments abweichen,
Mittel zum Vergleichen des ersten Parameters mit dem zweiten Parameter,
Mittel zum Bestimmen der Drehmomentkennlinie auf der Grundlage des Vergleichs, und
Mittel zum Steuern des Motors auf der Grundlage der bestimmten Drehmomentkennlinie.

**Revendications**

1. Procédé pour maximiser l'efficacité énergétique d'un système d'entraînement électrique comprenant un moteur électrique et une charge, où le procédé est **caractérisé par** les étapes suivantes :

   déterminer les caractéristiques de couple dépendantes de la vitesse du système (21, 22, 23, 24), où les caractéristiques de couple sont sélectionnées parmi deux types de comportement : un comportement linéaire ou un comportement quadratique du couple du moteur par rapport à une vitesse de rotation du moteur, et
   commander le moteur sur la base des caractéristiques de couple déterminées (25).

2. Procédé tel que revendiqué dans la revendication 1, dans lequel la détermination des caractéristiques de couple comprend les étapes suivantes :

   déterminer un couple du moteur et une vitesse de rotation du moteur,
   collecter une pluralité de points de données, où chaque point de données représente le couple du moteur à la vitesse de rotation du moteur,
   calculer une valeur pour un premier paramètre sur la base des points de données, où le premier paramètre représente dans quelle mesure les points de données diffèrent du comportement quadratique du couple,
   calculer une valeur pour un second paramètre sur la base des points de données, où le second paramètre représente dans quelle mesure les points de données diffèrent du comportement linéaire du couple,
   comparer le premier paramètre au second paramètre, et
   déterminer les caractéristiques de couple sur la base de la comparaison.

3. Procédé tel que revendiqué dans la revendication 2, dans lequel le calcul de la valeur du premier paramètre comprend les étapes suivantes :

   former deux équations sur la base de deux points de données où, pour chaque point de données, le couple est le carré de la vitesse de rotation multiplié par un premier coefficient et incrémenté par un deuxième coefficient, et où les deux équations ont les mêmes coefficients,
   résoudre les valeurs des coefficients,
   calculer un couple attendu pour une vitesse de rotation à un troisième point de données sur la base des coefficients et de la vitesse de rotation au troisième point de données,
   calculer la différence entre le couple attendu et le couple au troisième point de données, et
   utiliser la différence comme valeur du premier paramètre, et
   où le calcul de la valeur du second paramètre comprend les étapes suivantes :

      former deux équations sur la base de deux points de données où, pour chaque point de données, le couple est la vitesse de rotation multipliée par un premier coefficient et incrémentée par un deuxième coefficient, et où les deux équations ont les mêmes coefficients,
      résoudre les coefficients,
      calculer un couple attendu pour une vitesse de rotation à un troisième point de données sur la base des coefficients et de la vitesse de rotation au troisième point de données,
      calculer la différence entre le couple attendu et le couple au troisième point de données, et
      utiliser la différence comme valeur du second paramètre.

4. Procédé tel que revendiqué dans la revendication 2 ou la revendication 3, dans lequel le couple est calculé à partir d'une puissance déterminée fournie au moteur.

**5.** Procédé tel que revendiqué dans la revendication 1, dans lequel le système d'entraînement électrique est commandé sur la base d'un couple de référence, où l'entraînement électrique est initialement réglé sur un mode de performance économique où le flux est limité de manière à réaliser des économies d'énergie, et où la détermination des caractéristiques de couple comprend les étapes suivantes :

déterminer l'importance du taux de variation du couple de référence,
comparer l'importance à une limite définie, et si l'importance dépasse la limite définie,
définir l'entraînement électrique sur un mode de fonctionnement dynamique où le flux n'est pas limité.

**6.** Procédé tel que revendiqué dans la revendication 1, dans lequel le système d'entraînement électrique est commandé sur la base d'un couple de référence, où l'entraînement électrique est initialement réglé sur un mode de performance économique où le flux est limité de manière à améliorer le rendement énergétique, et où la détermination des caractéristiques de couple comprend les étapes suivantes :

déterminer un couple du moteur,
déterminer la différence entre le couple de référence et le couple déterminé,
comparer la différence à une limite définie et, si la différence dépasse la limite définie,
définir l'entraînement électrique sur un mode de fonctionnement dynamique où le flux n'est pas limité.

**7.** Appareil pour maximiser l'efficacité énergétique d'un système d'entraînement électrique comprenant un moteur électrique et une charge, où l'appareil est **caractérisé par** :

des moyens (31) configurés pour déterminer des caractéristiques de couple dépendantes de la vitesse, où les caractéristiques de couple du système sont sélectionnées parmi deux types de comportement : un comportement linéaire et un comportement quadratique du couple du moteur par rapport à une vitesse de rotation du moteur, et
des moyens (31) configurés pour commander le moteur sur la base des caractéristiques de couple déterminées.

**8.** Appareil tel que revendiqué dans la revendication 7, dans lequel les moyens pour déterminer les caractéristiques de couple comprennent :

des moyens pour déterminer un couple du moteur et une vitesse de rotation du moteur,
des moyens pour collecter une pluralité de points de données, où chaque point de données représente le couple du moteur à la vitesse de rotation du moteur,
des moyens pour calculer une valeur pour un premier paramètre sur la base des points de données, où le premier paramètre représente dans quelle mesure les points de données diffèrent du comportement quadratique du couple,
des moyens pour calculer une valeur pour un second paramètre sur la base des points de données, où le second paramètre représente dans quelle mesure les points de données diffèrent du comportement linéaire du couple,
des moyens pour comparer le premier paramètre au second paramètre,
des moyens pour déterminer les caractéristiques de couple sur la base de la comparaison, et
des moyens pour commander le moteur sur la base des caractéristiques de couple déterminées.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120217908 A1